# EUROPEAN PATENT APPLICATION

(11) **EP 4 583 379 A1**
(43) Date of publication of application: **09.07.2025**
(21) Application number: 24183218.7
(22) Date of filing: 19.06.2024
(51) Int. Cl.: H02K 7/18, H02K 21/12, H02K 21/26, H02K 21/22, H02K 21/24

(54) **POWER GENERATING DEVICE**

(30) Priority: 05.01.2024 TW 113100622
(71) Applicant: Coplus Inc., Tainan City 709031 (TW)
(72) Inventor: Wu, Po-Hua, Tainan City 709031 (TW)
(74) Representative: Dehns

(57) **Abstract**

A power generating device (200) is adapted to be mounted to a rotatable object, and includes a housing (3) adapted to be fixedly mounted to the object, a rotor module (4) mounted to the housing (3) along an axial line (800), a stator module (5) mounted to and rotatable relative to the housing (3) about the axial line (800), and a counterweight module (6) mounted to the stator module (5). A center of gravity of the counterweight module (6) is located below the axial line (800). When the object rotates, the rotor module (4) is driven to rotate relative to the stator module (5) which does not rotate with the rotor module (4) due to the counterweight module (6), and one of the rotor module (4) and the stator module (5) generates electric power according a magnetic field provided by another one of the rotor module and the stator module.

## Description

The disclosure relates to a power generating device, and more particularly to a power generating device that is adapted to be mounted to a rotatable object.

Currently, carbon reduction is promoted around the world. Carbon reduction may be achieved by energy conservation or using natural resources to generate electric power. Carbon reduction may be also achieved by converting kinetic energy of an object in motion (for example, a wheel of a moving vehicle) into electric power.

Therefore, an object of the disclosure is to provide a power generating device adapted to be mounted to a rotatable object.

According to an aspect of the disclosure, there is provided a power generating device according to claim 1.

Other features and advantages of the disclosure will become apparent in the following detailed description of the embodiment(s) with reference to the accompanying drawings. It is noted that various features may not be drawn to scale.
Figure 1 is a perspective view illustrating a power generating device according to a first embodiment of the disclosure.
Figure 2 is an exploded perspective view of the power generating device of the first embodiment.
Figure 3 is a front view illustrating the power generating device of the first embodiment, where a side cover is omitted.
Figure 4 is a side sectional view of the power generating device of the first embodiment.
Figure 5 is a front view illustrating a power generating device, where a side cover is omitted, according to a second embodiment of the disclosure.
Figure 6 is an exploded perspective view of a power generating device according to a third embodiment of the disclosure.
Figure 7 is a side sectional view of the power generating device of the third embodiment.
Figure 8 is a side sectional view of a power generating device according to a fourth embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

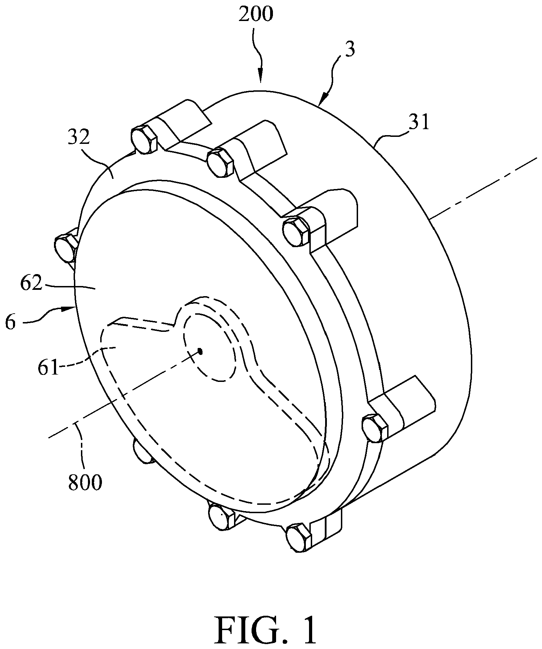

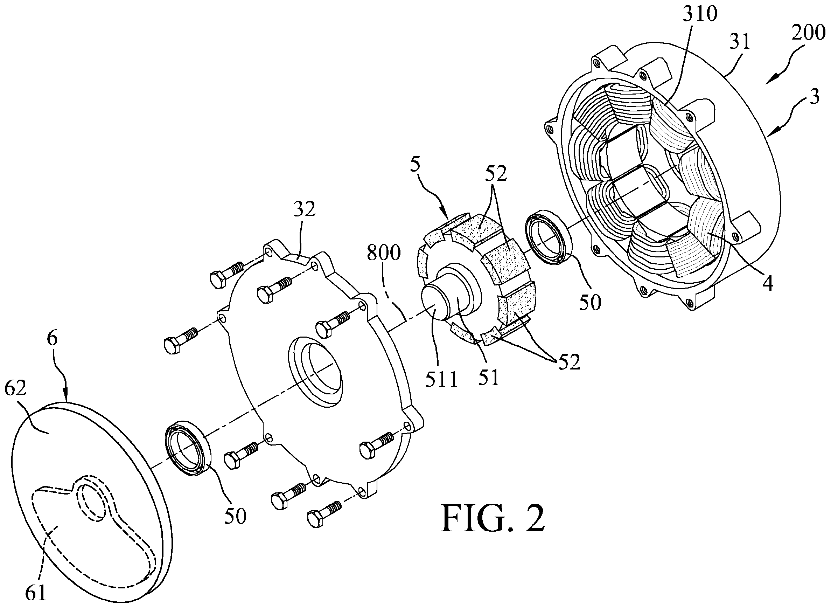

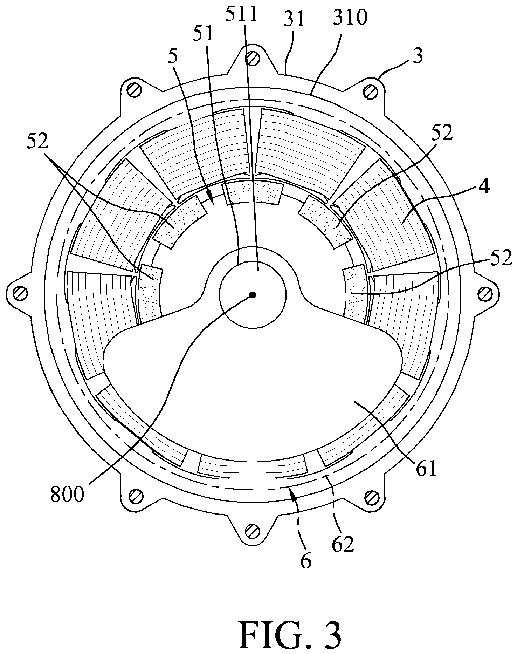

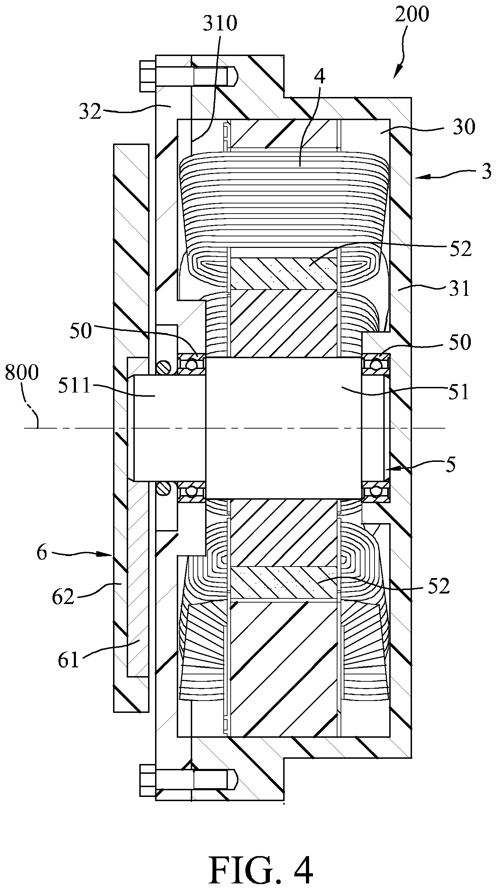

Referring to Figures 1 to 4, according to a first embodiment of the disclosure, a power generating device 200 is adapted to be mounted to a rotatable object (not shown). The rotatable object may be, but not limited to, a wheel rim of a vehicle.

The power generating device 200 includes a housing 3 that is adapted to be fixedly mounted to the object along an axial line 800 which is substantially horizontal, a rotor module 4 that is fixedly and coaxially mounted to the housing 3 along the axial line 800, a stator module 5 that is mounted to the housing 3 and that is rotatable relative to the housing 3 about the axial line 800, and a counterweight module 6 that is fixedly mounted to the stator module 5. The power generating device 200 may be adapted to be coaxially mounted to the object along the axial line 800, but not limited thereto.

The housing 3 includes a main body 31 that has a side opening 310, and a side cover 32 that is disposed on the main body 31 and that covers the side opening 310 of the main body 31. The main body 31 and the side cover 32 cooperatively define a mounting space 30 for disposition of the rotor module 4 and the stator module 5. In this embodiment, the mounting space 30 is a cylindrical space that is centered at the axial line 800.

In the first embodiment, the rotor module 4 is a ring-shaped coil assembly that is fixedly mounted to a radially inner periphery of the main body 31 and that may generate electric power through electromagnetic induction. Coil assembly is of conventional knowledge and has a number of types, details thereof are omitted herein for the sake of brevity.

The stator module 5 includes a rotating shaft 51 that extends along the axial line 800 and that is rotatably mounted to the main body 31 and the side cover 32 of the housing 3, and a plurality of magnets 52 that are angularly spaced apart from one another about the axial line 800 and that are fixedly mounted to a radially outer periphery of the rotating shaft 51. The rotating shaft 51 is rotatably mounted to the main body 31 and the side cover 32 through two bearings 50, and has a mounting end portion 511 that extends outwardly from the mounting space 30 and that protrudes out of the side cover 32. The magnets 52 are located radially inwardly of the rotor module 4, are spaced apart from the rotor module 4, and provide a magnetic field for electromagnetic induction.

The counterweight module 6 is coaxially and fixedly mounted to the mounting end portion 511 of the rotating shaft 51 of the stator module 5, is located at a side of the housing 3, and is located outside the housing 3. A center of gravity of the counterweight module 6 is located below the axial line 800. Specifically, the counterweight module 6 includes a cover member 62 that is configured as a circular plate and that is centered at the rotating shaft 51, and a counterweight body 61 that is disposed on the cover member 62, that is eccentrically and fixedly mounted to the rotating shaft 51, and that makes the center of gravity of the counterweight module 6 located below the axial line 800. The cover member 62 covers the counterweight body 61 from a side of the counterweight body 61 that is opposite to the main body 31 of the housing 3.

When the object, which the power generating device 200 is mounted to, rotates, the housing 3 is driven by the object to rotate and the rotor module 4 is driven by the housing 3 to rotate simultaneously about the axial line 800. Specifically, the rotor module 4 is driven to rotate relative to the stator module 5 which does not rotate with the rotor module 4 due to a force of gravity of the counterweight module 6, and the rotor module 4 generates the electric power according to the magnetic field provided by the magnets 52 of the stator module 5 through electromagnetic induction. The rotor module 4 may be electrically coupled to a power storage device (not shown) to store the electric power generated by the rotor module 4 in the power storage device, or be electrically coupled to an electric device (not shown) to supply the electric power generated by the rotor module 4 to the electric device.

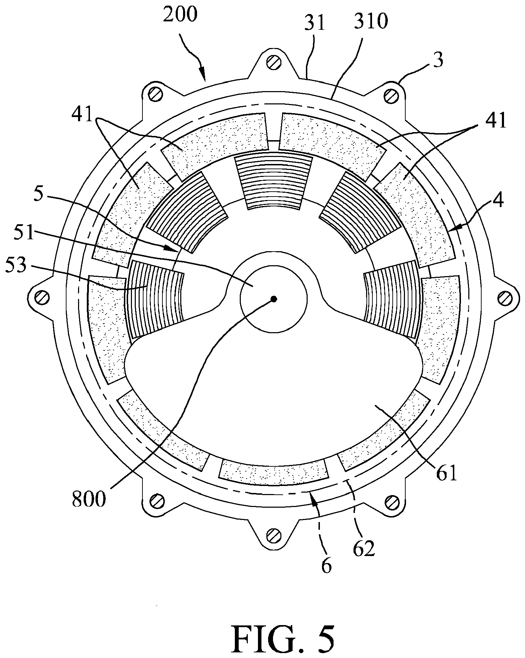

Referring to Figure 5, according to a second embodiment of the disclosure, a power generating device 200 is illustrated. The difference between the second embodiment and the first embodiment resides in the rotor module 4 and the stator module 5. For the sake of brevity, only the difference is described below.

In the second embodiment, the rotor module 4 includes a plurality of magnets 41 that are fixedly mounted to the radially inner periphery of the main body 31 and that are angularly spaced apart from one another about the axial line 800. The stator module 5 includes the rotating shaft 51, and a coil assembly 53 that is sleeved on the rotating shaft 51. The magnets 41 are spaced apart from the coil assembly 53 and are located radially outwardly of the coil assembly 53.

Similar to the first embodiment, when the housing 3 is driven by the object to rotate, the magnets 41 of the rotor module 4 are driven to rotate relative to the coil assembly 53 of the stator module 5, so that the coil assembly 53 generates the electric power according to the magnetic field that is provided by the magnets 41 through electromagnetic induction.

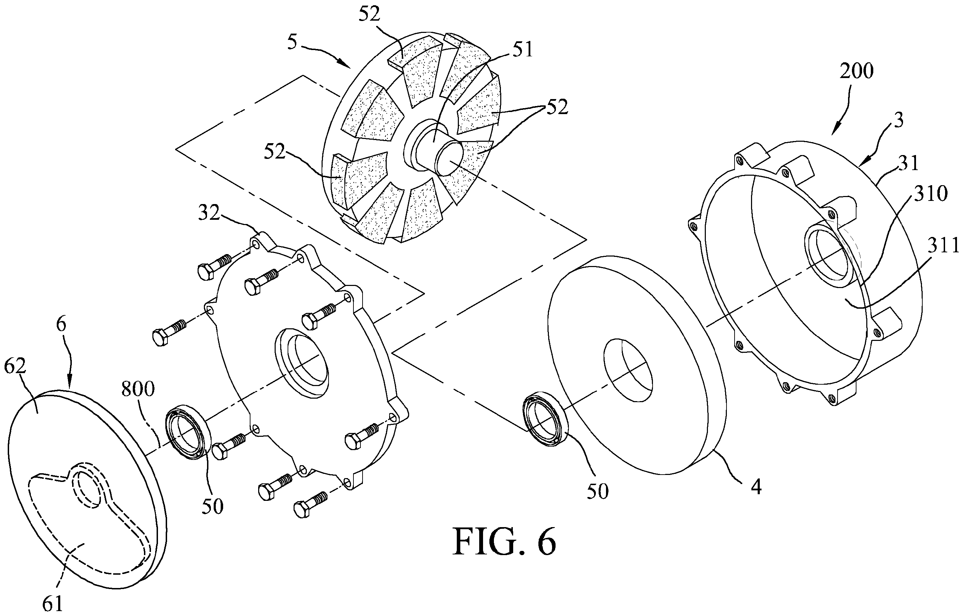

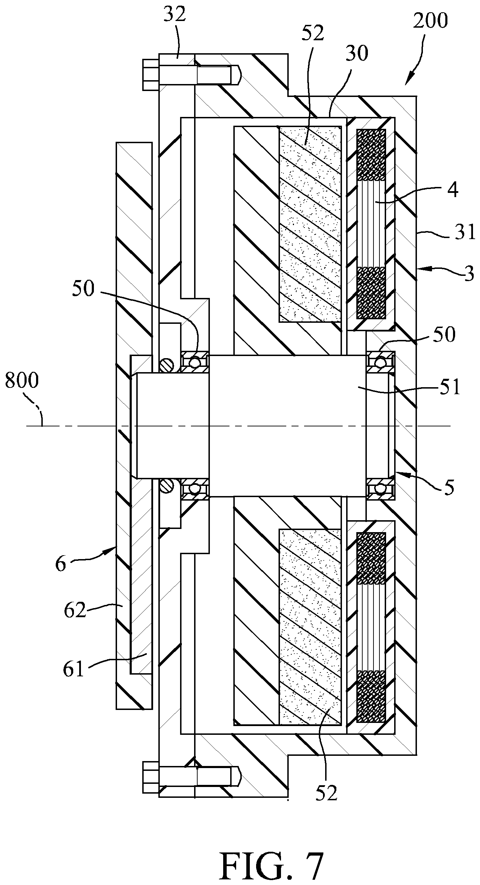

Referring to Figures 6 and 7, a power generating device 200 according to a third embodiment of the disclosure is illustrated. The difference between the third embodiment and the first embodiment resides in the rotor module 4 and the rotor module 5.

In the third embodiment, the main body 31 has a side wall 311 that is spaced apart from the side cover 32 and that faces the side cover 32. The rotor module 4 is a coil assembly that is disk-shaped and that is fixedly and coaxially mounted to the side wall 311. The magnets 52 of the stator module 5 are disposed on a side of the rotating shaft 51 that faces the side wall 311, and are spaced apart from the rotor module 4 along the axial line 800.

Similarly, when the housing 3 is driven by the object to rotate, the rotor module 4 is driven to rotate relative to the magnets 52 of the stator module 5 and the rotor module 4 generates the electric power.

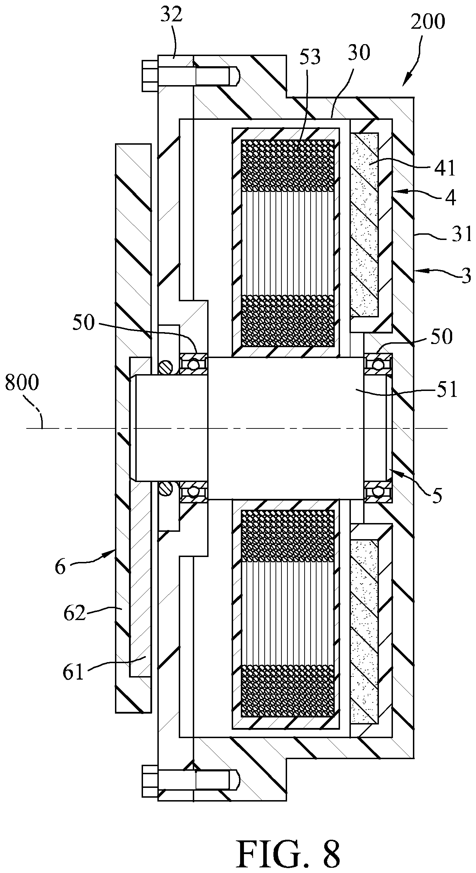

Referring to Figure 8, a power generating device 200 according to a fourth embodiment of the disclosure is illustrated. The difference between the fourth embodiment and the third embodiment resides in the rotor module 4 and the stator module 5.

In the fourth embodiment, the rotor module 4 includes a plurality of magnets 41 that are fixedly mounted to the side wall of the main body 31 and that are angularly spaced apart from one another about the axial line 800. The stator module 5 includes the rotating shaft 51, and a coil assembly 53 that is fixedly sleeved on the rotating shaft 51 and that is disk-shaped. The magnets 41 of the rotor module 4 are spaced apart from the coil assembly 53 of the stator module 5 along the axial line 800.

Similarly, when the housing 3 is driven by the object to rotate, the magnets 41 of the rotor module 4 are driven to rotate relative to the coil assembly 53 of the stator module 5, so that the coil assembly 53 generates the electric power.

In the above-mentioned embodiments, the counterweight body 61 is eccentrically and fixedly mounted to the mounting end portion 511 of the rotating shaft 51 to limit the rotation of the stator module 5 through a force of gravity of the counterweight module 61. However, in some embodiments, the cover member 62 is fixedly mounted to the mounting end portion 511 of the rotating shaft 51, and the counterweight body 61 is eccentrically disposed on the cover member 62 and is disposed on the rotating shaft 51 through the cover member 62 to limit the rotation of the stator module 5 through the force of gravity of the counterweight body 61.

In summary, when the power generating device 200 is mounted to the object and the object rotates, the power generating device 200 of the disclosure may turn angular kinetic energy of the object into the electric power, through the rotor module 4 and the stator module 5 that are mounted to the housing 3 and the counterweight module 6 that is mounted to the stator module 5, to supply the electric power to the electric device or to charge the power storage device. Therefore, the object of the disclosure is indeed achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A power generating device (200) adapted to be mounted to a rotatable object, **characterized by**:
a housing (3) adapted to be fixedly mounted to the object;
a rotor module (4) fixedly and coaxially mounted to said housing (3) along an axial line (800) that is substantially horizontal;
a stator module (5) mounted to said housing (3) and rotatable relative to said housing (3) about the axial line (800); and
a counterweight module (6) fixedly mounted to said stator module (5), a center of gravity of said counterweight module (6) being located below the axial line (800);
when the object rotates, said rotor module (4) being driven to rotate relative to said stator module (5) which does not rotate with said rotor module (4) due to a force of gravity of said counterweight module (6), and one of said rotor module (4) and said stator module (5) generating electric power according a magnetic field that is provided by another one of said rotor module (4) and said stator module (5) through electromagnetic induction.

2. The power generating device (200) as claimed in claim 1, wherein said rotor module (4) is a coil assembly that generates the electric power, said stator module (5) including a rotating shaft (51) that extends along the axial line (800) and that is rotatably mounted to said housing (3), and a plurality of magnets (52) that are disposed on said rotating shaft (51) about the axial line (800) and that provide the magnetic field, said counterweight module (6) being disposed on said rotating shaft (51).

3. The power generating device (200) as claimed in claim 2, wherein said magnets (52) of said stator module (5) are disposed on a radially outer periphery of said rotating shaft (51), are spaced apart from said rotor module (4), and are located radially inwardly of said rotor module (4).

4. The power generating device (200) as claimed in claim 2, wherein said magnets (52) of said stator module (5) are spaced apart from said rotor module (4) along the axial line (800).

5. The power generating device (200) as claimed in claim 1, wherein said rotor module (4) includes a plurality of magnets (41) that are fixedly mounted to said housing (3) about said axial line (800) and that provide the magnetic field, said stator module (5) including a rotating shaft (51) that extends along the axial line (800) and that is rotatably mounted to said housing (3), and a coil assembly (53) that is sleeved on said rotating shaft (51) and that generates the electric power, said counterweight module (6) being mounted to said rotating shaft (51).

6. The power generating device (200) as claimed in claim 5, wherein said magnets (41) of said rotor module (4) are spaced apart from said coil assembly (53) and are located radially outwardly of said coil assembly (53).

7. The power generating device (200) as claimed in claim 5, wherein said magnets (41) of said rotor module (4) are spaced apart from said coil assembly (53) along the axial line (800).

8. The power generating device (200) as claimed in claim 1, wherein said housing (3) includes a main body (31) having a side opening (310), and a side cover (32) disposed on said main body (31) and covering said side opening (310), said side cover (32) and said main body (31) cooperatively defining a mounting space (30) for disposition of said rotor module (4) and said stator module (5), said stator module (5) including a rotating shaft (51) that extends along the axial line (800) and that is rotatably mounted to said main body (31) and said side cover (32).

9. The power generating device (200) as claimed in claim 8, wherein said rotating shaft (51) has a mounting end portion (511) protruding out of said side cover (32), said counterweight module (6) being mounted to said mounting end portion (511) and being located outside said housing (3).

10. The power generating device (200) as claimed in claim 9, wherein said counterweight module (6) includes a cover member (62) that is configured as a circular plate and that is centered at said rotating shaft (51), and a counterweight body (61) that is disposed on said cover member (62) and that makes the center of gravity of said counterweight module (6) located below the axial line (800), one of said cover member (62) and said counterweight body (61) of said counterweight module (6) being fixedly mounted to said mounting end portion (511).
